# EUROPÄISCHE PATENTSCHRIFT

(11) **EP 0 836 032 B1**
(45) Veröffentlichungstag und Bekanntmachung des Hinweises auf die Patenterteilung: **11.02.2004**
(21) Anmeldenummer: 97114446.4
(22) Anmeldetag: 21.08.1997
(51) Int. Cl.: F16F 7/12, B60R 19/22, F16F 1/37, B29C 44/12, B65D 19/00, B65D 19/24

(54) **Bauteil zur Energieabsorption**
Energy absorbing construction element
Elément de construction à absorption d'énergie

(30) Priorität: 11.10.1996 DE 19641944
(43) Veröffentlichungstag der Anmeldung: 15.04.1998
(73) Patentinhaber: Fagerdala Deutschland GmbH, 99885 Ohrdruf (DE)
(72) Erfinder: Wirobski, Reinhard, 45768 Marl (DE); Günzel, Bernd, Dr., 45721 Haltern (DE)
(74) Vertreter: Kaewert, Klaus

(56) Entgegenhaltungen:
- EP-A- 0 467 193
- EP-A- 0 517 377
- FR-A- 2 148 151
- FR-A- 2 211 901
- GB-A- 936 232
- GB-A- 1 308 036
- GB-A- 2 280 167
- US-A- 3 704 877
- US-A- 4 321 989
- US-A- 5 100 187

## Beschreibung

Gegenstand der Erfindung ist ein Bauteil zur Energieabsorption, das einen polyolefinischen Partikelschaumstoffkern enthält, wobei zusätzlich Unterstützungselemente umschaumt werden, die in Belastungsrichtung orientiert sind, sowie ein Verfahren zu dessen Herstellung

Energieabsorbierende Elemente werden insbesondere im Kraftfahrzeugbau eingesetzt, um einen großen Teil der kinetischen Aufprallenergie aufzunehmen und damit die Sicherheit der Insassen zu erhöhen Bekannte Anwendungen sind Stoßfanger, Seitenturen und Pralltopfelemente, die zur Abstutzung der Stoßstange gegenüber der tragenden Karosseriestruktur eingesetzt werden. Die energieabsorbierenden Elemente können dabei aus den unterschiedlichsten Materialien hergestellt werden

Die DE-OS 43 27 022 beschreibt einen mehrschichtigen Aufbau mit Abstandsgeweben und Verstärkungsfasern aus Glas. Kohlefaser oder Kunststoff

Die EP-A-0 097 504 und die EP-A-0 155 558 beschreiben eine Bumperanwendung, die expandiertes Polypropylen als energieabsorbierendes Teil im Kernelement verwendet

In der EP-A-0 401 838 wird ein energieabsorbierendes Kompositmaterial beschrieben, das aus zerbrechlichen Hohlkugeln und Partikelschaum hergestellt wird

Weitere energieabsorbierende Bauteile sind in der EP-A-0 055 364, der DE-OS 37 23 681 und der DE-OS 21 58 086 beschrieben

Die FR-A-2 148 151 beschreibt eine Transport palette Für den güterverkehr.

Allen diesen Ausführungen ist gemeinsam, daß sie sich nur aufwendig herstellen lassen oder daß bei beginnender Verformung zunachst nur wenig Energie absorbiert wird.

Zur Charakterisierung eines energieabsorbierenden Elementes kann der Gutefaktor herangezogen werden Dieser gibt das Verhaltnis der Gesamtfläche unter der

Belastungskurve zu derjenigen unter der Rechteckkurve des idealen Energieabsorbers in einem Kraft-Weg-Diagramm an Die maximale Energie kann von einem Element erst dann absorbiert werden, wenn ein möglichst vertikaler verformungsloser Kraftanstieg bis zu einem bestimmten Kraftmaximum und eine nachfolgende konstante Kraftaufnahme bis zu einem Verformungsmaximum realisierbar ware. Dies wurde einem rechteckigen Spannungs-Stauchungs-Verlauf und damit einem idealen Energieabsorber entsprechen Energieabsorbierende Elemente aus Polyolefinschaum erfüllen nicht den Anspruch eines idealen Absorbers; im Falle von Polypropylenschaum (EPP) liegt der Gutefaktor bei quasistatischen Messungen nur im Bereich von 0,60 bis 0,65

Somit stellte sich die Aufgabe, ein energieabsorbierendes Element auf Basis von Polyolefinschaum zu erhalten, bei dem der Gutefaktor deutlich gesteigert werden kann und bei dem bereits bei beginnender Verformung die Energieabsorption hoch ist.

Diese Aufgabe wird mit den Merkmalen gemäss Anspruch 1 gelöst.

Aus der EP-A-0 254 530 ist ein Kernmaterial für Automobilstoßfanger bekannt, das Einbuchtungen enthält, in die Verstärkungselemente aus Kompaktmaterial eingepaßt werden Die Tiefe der Einbuchtungen betragt vorzugsweise 15 - 95 % der Dicke des Kernmaterials Es hat sich jedoch erwiesen, daß das Einschieben der Verstärkungselemente in den Schaumkern sehr vorsichtig geschehen muß, um den Kern oder die Verstarkungselemente nicht zu beschadigen Aus diesem Grunde müssen die Verstarkungselemente kompakter gebaut werden als unbedingt notig, was zu unnotig hohem Gesamtgewicht führt Zudem ist dann, wenn die Verstarkungselemente nicht über die gesamte Dicke des Kernes gehen, bei beginnender Verformung die Energieabsorption nicht hoch genug

Bei der vorliegenden Erfindung kann als Kompaktmaterial jeder Kunststoff mit einer hinreichenden Steifigkeit eingesetzt werden; beispielsweise seien Polyolefine wie Polypropylen, Polyamide wie Polyamid-6, Polyamid-66, Polyamid-612, Polyamid-12, Polyester wie Polybutylenterephthalat (auch als Blend mit Polycarbonat), flussigkristalline aromatische Copolyester, Polystyrol, Polyphenylenoxid oder PVC genannt. Zum Erzielen einer höheren Steifigkeit kann das Kompaktmaterial auch Fullstoffe und/oder Fasern enthalten. Unter Recyclinggesichtspunkten wird vorzugsweise ein Polypropylen eingesetzt

Die Umschäumung von Elementen ist im Prinzip Stand der Technik Im vorliegenden Fall wird hierzu Partikelschaum verwendet. Die Herstellung von polyolefinischem Partikelschaum ist beispielsweise aus der EP-A-0 053 333 und der EP-A-0 095 109 bekannt Im Rahmen der Erfindung kann jeder bekannte Polyolefinschaum verwendet werden, beispielsweise aus einem Polyethylen hoher, mittlerer oder niedriger Dichte, einem Polypropylen wie Polypropylen-Homopolymerisat, Ethylen-Propylen-Blockcopolymeren, Blends aus Polypropylen mit Ethylen-Vinylacetat-Copolymeren und bevorzugt aus Ethylen-Propylen-Buten-( 1)-Terpolymeren oder Ethylen-Propylen-Randomcopolymeren

Vorzugsweise werden hierbei Ethylen-Propylen-Buten-(1)-Randomterpolymere mit 1 bis 15 Gew -% Ethylen und 1 bis 10 Gew.-% Buten-(1) oder Ethylen-Propylen-Randomcopolymere mit 1 bis 15 Gew -% Ethen und insbesondere mit 2 bis 5 Gew.-% Ethen verwendet.

Bevorzugt wird Partikelschaum mit Schuttdichten von 12 bis 80 g/l eingesetzt Daraus resultieren Formteile mit Raumgewichten von 15 bis 170 g/l und insbesondere von 25 bis 100 g/l

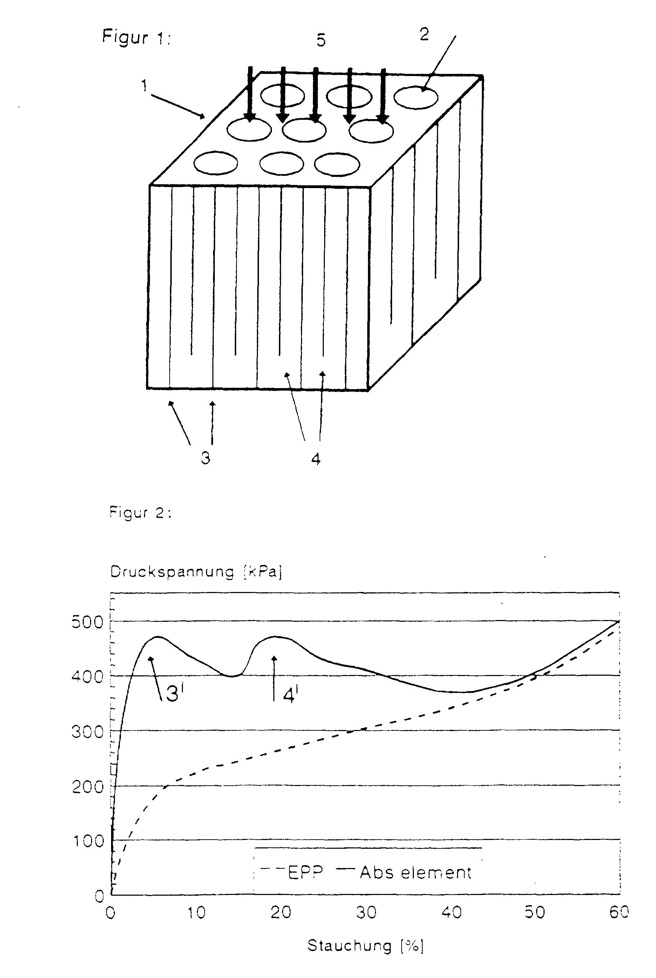

Die Fig 1 zeigt den schematischen Aufbau eines Elementes zur Energieabsorption an einem wurfelformigen Ausschnitt Nimmt man als Beispiel einen Stoßfanger oder eine Seitentur, so wird im Belastungsfall die Energie großflächig über die Stoßfangerhülle bzw das Seitenturblech auf das Element übertragen Die eingeleitete Energie wird dabei zunächst von den Unterstützungselementen **(3)** aufgenommen, die je nach Dimensionierung bei einer Stauchung von 2 - 20 % einknicken Das Einknicken der

Unterstützungselemente wird durch die Umschäumung erschwert. Ein Teil der Energie wird gleichmäßig quer zur Stauchungsrichtung vom Polyolefinschaum aufgenommen Bei Deformation oberhalb von ca. 20 % übernimmt der Polyolefinschaum die Energieabsorption. Im Bedarfsfall können weitere Ebenen mit Unterstutzungselementen (4) angeordnet werden, die nach dem Einknicken der ersten Ebene in gleicher Weise wirksam werden.

Die Unterstützungselemente werden längs der Deformationsrichtung (5) angeordnet. Abweichend davon können die Unterstützungselemente auch ganz oder teilweise in einem beliebigen Winkel zur Deformationsrichtung angeordnet werden, um seitlich auftretende Kräfte aufzunehmen Die Lange der Unterstutzungselemente für die erste Ebene **(3)** entspricht der Dicke des Bauteiles in Stauchungsrichtung

Die Form der Unterstützungselemente kann unterschiedlichster Gestalt und Stärke sein (massive Stäbe, dünne Rohre, Lamellen, Kreuze, Y-, X-, T-, L-, U-, Z-Profile etc.). Für die praktische Handhabung werden die unterstutzenden Elemente an einem Träger wie z B. einer Tragerfolie **(1)** mit Durchbrüchen **(2)** auf einem Trägerraster oder auf einer Außenhülle fixiert Diese Teile werden vorzugsweise nach dem Spritzgußverfahren hergestellt Die gesamte Anordnung wird in ein Formwerkzeug eingelegt und in bekannter Weise mit Partikelschaum hinterschäumt. Durch geeignete Starke, Form, Anzahl und Lange der Unterstützungselemente pro Flächeneinheit kann die Charakteristik der Kraft-Weg-Kurve derart gunstig beeinflußt werden, daß ein Gutefaktor von 0,8 - 0,95 erreicht werden kann

Die Fig 2 gibt den Verlauf der Belastungskurven eines Polypropylenschaum(EPP)-Kerns und eines unter Verwendung von EPP hergestellten Elementes zur Energieabsorption mit zwei Unterstutzungsebenen (entsprechend Fig 1) im Kraft-Weg-Diagramm wieder Die Maxima **(3')** und **(4')** ergeben sich aus der Belastung der jeweiligen Unterstützungsebene

Ausgehend von diesem Beispiel erzeugt das Einbringen einer dritten Unterstutzungsebene bei ca 70 % der Bauteillänge in Stauchungsrichtung bei ca. 30 % Deformation ein weiteres Maximum der Energieabsorption. Dadurch wird der Gutefaktor des Systems weiter verbessert.

Die Messungen zur Aufnahme der Kraft-Weg-Kennlinien werden nach DIN 53 421 ermittelt. Dabei werden Prüfkörper mit Unterstützungselementen und einer Kantenlänge von 50 mm zwischen zwei ebenen Platten mit einer konstanten Geschwindigkeit von 5 mm/min bis 60 % Deformation gestaucht.

Das erfindungsgemäße energieabsorbierende Element kann im Automobilbereich beispielsweise als Stoßfanger, als Seitenaufprallschutz, etwa im Türbereich, oder als Pralltopfelement eingesetzt werden Eine weitere Anwendung findet sich bei wiederverwendbaren Transportpalettensystemen, die mehrfach ubereinandergestapelt werden. Durch die Einfügung einer Ebene von Unterstutzungselementen wird eine hohe statische Flachenbelastbarkeit bei Dauerlast erreicht, so daß die Paletten hierbei nicht gestaucht werden Erst im Sturzfall erfolgt die beschriebene Energieabsorption durch Einknicken der Unterstutzungselemente

## Patentansprüche

1. Energieabsorptions-Element, welches Unterstützungselemente enthält, die sich mindestens teilweise in Stauchungslängsrichtung des Energieabsorptions-Elementes erstrecken und die mit einem Partikelschaum umschäumt sind, **dadurch gekennzeichnet, dass** die Unterstützungselemente aus kompaktmaterial bestehen und zumindest teilweise die Stauchung aufnehmen, wobei sie bei Überschreiten einer Stauchung von maximal 20%, bezogen auf ihre Länge, in Stauchrichtung einknicken.

2. Energieabsorptions-Element nach Anspruch 1, **dadurch gekennzeichnet, daß** die Unterstützungselemente bei Überschreiten einer Stauchung von minimal 2% bezogen auf ihre Länge in Stauchrichtung einknicken.

3. Energieabsorptions-Element nach einem der Ansprüche 1 bis 2, **gekennzeichnet durch** mehrere Unterstützungselemente, die bei der Stauchung nicht alle gleichzeitig, sondern zumindest teilweise nacheinander einknicken.

4. Energieabsorptions-Element nach Anspruch 3, **gekennzeichnet durch** Unterstützungselemente mit unterschiedlicher Länge in Stauchrichtung.

5. Energieabsorptionselement nach einem der Ansprüche 1 bis 4, **dadurch gekennzeichnet, dass** die Unterstützungselemente Form eines Stabes oder Rohres oder von Lamellen oder Kreuzes oder von Y- oder X- oder V- oder T- oder L- oder U- oder Z-Profilen aufweisen aufweisen.

6. Energieabsoprtions-Element nach einem der Ansprüche 1 bis 5, **gekennzeichnet durch** einen Gütefaktor von 0,65 bis 0,95, bezogen auf eine quasistatische Messung.

7. Energieabsorptions-Element nach Anspruch 6, **gekennzeichnet durch** einen Gütefaktor von 0,8 bis 0,95, bezogen auf eine quasistatische Messung.

8. Energieabsorptions-Element nach einem der Ansprüch 1 bis 7, **gekennzeichnet durch** die Verwendung für Stoßfänger oder Seitenaufprallschutz oder Pralltopfelement an Kraftfahrzeugen.

9. Energieabsorptions-Element nach einem der Ansprüche 1 bis 8, **gekennzeichnet durch** die Verwendung für Paletten.

## Claims

1. Energy absorption element comprising support elements which extend at least partly in the compression longitudinal direction of the energy absorption element and are surrounded by a particle foam, **characterized in that** the support elements consist of compact material and at least partially absorb the compression, during which they buckle in the compression direction if a maximum compression of 20%, based on their length, is exceeded.

2. Energy absorption element according to Claim 1, **characterized in that** the support elements buckle in the compression direction if a minimum compression of 2%, based on their length, is exceeded.

3. Energy absorption element according to one of Claims 1 and 2, **characterized by** a plurality of support elements which do not all simultaneously buckle during compression, but at least some of which do so successively.

4. Energy absorption element according to Claim 3, **characterized by** support elements having different lengths in the compression direction.

5. Energy absorption element according to one of Claims 1 to 4, **characterized in that** the support elements have the shape of a rod or pipe or of lamellae or a cross or of Y or X or V or T or L or U or Z profiles.

6. Energy absorption element according to one of Claims 1 to 5, **characterized by** a quality factor of from 0.65 to 0.95, based on a quasi-static measurement.

7. Energy absorption element according to Claim 6, **characterized by** a quality factor of from 0.8 to 0.95, based on a quasi-static measurement.

8. Energy absorption element according to one of Claims 1 to 7, **characterized by** the use for bumpers or side impact protection or impact absorbing element in motor vehicles.

9. Energy absorption element according to one of Claims 1 to 8, **characterized by** the use for pallets.

## Revendications

1. Élément à absorption d'énergie, contenant des éléments de soutien s'étendant au moins partiellement dans la direction longitudinale de refoulement de l'élément à absorption d'énergie, et enrobé, de façon alvéolaire, par une mousse de particules, **caractérisé en ce que** les éléments de soutien sont formés d'un matériau compact et supportent au moins partiellement le tassement, en subissant un flambage dans la direction de tassement, en cas de dépassement d'un tassement de valeur maximale 20% par rapport à leur longueur.

2. Élément à absorption d'énergie selon la revendication 1, **caractérisé en ce que** les éléments d'appui subissent un flambage dans la direction du tassement dans le cas de dépassement d'un tassement de valeur 2% par rapport à leur longueur.

3. Élément à absorption d'énergie selon l'une des revendications 1 à 2, **caractérisé par** des éléments d'appui qui, lors du tassement, ne subissent pas tous un flambage simultanément, mais au moins partiellement les uns après les autres.

4. Élément à absorption d'énergie selon la revendication 3, **caractérisé en ce que** les éléments d'appui ont une longueur différente dans la direction du tassement.

5. Élément à absorption d'énergie selon l'une des revendications 1 à 4, **caractérisé en ce que** les éléments d'appui présentent la forme d'une barre ou d'un tube, ou bien de lamelles ou de croix ou de profilés en Y, ou en X, ou en V, ou en T, ou en L, ou en U, ou en Z.

6. Élément à absorption d'énergie selon l'une des revendications 1 à 5, **caractérisé par** un facteur de qualité de 0,65 à 0,95 en se référant à une mesure quasi-statique.

7. Élément à absorption d'énergie selon la revendication 6, **caractérisé par** un facteur de qualité de 0,8 à 0,95 en se référant à une mesure quasi-statique.

8. Élément à absorption d'énergie selon l'une des revendications 1 à 7, **caractérisé par** l'utilisation pour des pare-chocs, ou bien la protection de chocs latéraux, ou des éléments formant pot contre les impacts, sur des véhicules automobiles.

9. Élément à absorption d'énergie selon l'une des revendications 1 à 8, **caractérisé par** l'utilisation pour des palettes.
